# EUROPEAN PATENT SPECIFICATION

(11) **EP 2 147 824 B1**
(45) Date of publication and mention of the grant of the patent: **26.10.2011**
(21) Application number: 08160898.6
(22) Date of filing: 22.07.2008
(51) Int. Cl.: B60Q 1/30, B60Q 11/00, H05B 33/08

(54) **Circuit for controlling the presence of a trailer connected to a towing truck, via the control of the electric current flow in the rear led lamps of the trailer**
Schaltung zur Prüfung des Vorhandenseins eines an eine Zugmaschine angekoppelten Anhängers mittels Prüfung des elektrischen Stromflusses in den rückwärtigen LED-Leuchten des Anhängers
Circuit de contrôle de la présence d'une remorque accouplée à un tracteur, via le contrôle du débit de courant électrique dans les feux arrière à DEL de la remorque

(43) Date of publication of application: 27.01.2010
(73) Proprietor: IVECO MAGIRUS AG, D-89079 Ulm (DE)
(72) Inventor: Brandenstein, Heinz, 89186, Illerrieden (DE)
(74) Representative: Borsano, Corrado

(56) References cited:
- EP-A- 1 830 607
- EP-A- 1 839 928
- DE-A1- 10 107 578
- DE-A1- 10 336 973
- DE-U1-202007 007 777

## Description

### DESCRIPTION

### FIELD OF THE INVENTION

The present invention relates to a circuit for controlling the presence of a trailer connected to a towing truck, via the control of the electric current flow in the rear LED lamps of the trailer.

### DESCRIPTION OF THE PRIOR ART

The control of the status if a trailer is connected to the towing vehicle is necessary for various electronic vehicle systems which start to check various trailer functionalities in case of the connection of a trailer, or, if no trailer connection is detected, stop this checks and for example move to another software mode.

The detection of the trailer is generally managed in a known way, which counts on the presence of bulb equipped rearlamps of the trailer, normally using the bulbs for the braking lights into the rear lamps. The today used systems would not work on trailers equipped with rearlamps with LEDs as light sources, as the currently used measuring systems uses the low cold resistance of the filaments in the bulbs of the rearlamps.

EP 1 839 928 A2 discloses an assembly with multiple current paths which are charged with the working current by a control device. The current paths and the light emitting diodes are interconnected in such a way that in case of failure of an individual current path the light emitting diodes in the other current paths are charged with the working currents.

EP 1 830 607 A1 discloses a vehicle lighting system comprising a directional indicator LED lamp and a microcontroller for controlling the LED lamp. In response to receiving an activation signal from a vehicle lighting circuit, the microcontroller connects the LED lamp and a load in parallel to the vehicle lighting circuit and in response to the microcontroller receiving a signal that the LED lamp has failed, the microcontroller causes an open circuit to be presented to the vehicle lighting circuit.

DE 20 2007 007 777 U1 discloses a circuit arrangement for interconnection with a towing vehicle and the trailer of a vehicle train. The arrangement has an input connector, which is designed for a load by an electrical filament lamp. An output connector is electrically connected with an LED arrangement. A filament lamp simulation unit is controlled by a current sensor, and a capacitor is arranged in a region of the LED arrangement. A potentiometer is provided between the input connector and the output connector, so that the operating voltage for the LED arrangement is adjusted to lie below operating voltage for the filament lamp.

DE 101 07 578 A1 discloses a lighting system for motor vehicles, comprising a power source and a power monitoring circuit for controlling the function of at least one lamp. In order to simulate a filament lamp, at least one electrical load is provided in a power branch disposed in parallel to the lamps that can only be connected for a limited time window. The time window for connecting the load is synchronized with a control time window of the power monitoring circuit.

Today state of the art circuits provide for some test pulses are sent to the trailers bulb (e.g. braking light bulb) and the flow of the current is measured. The test pulses are short enough to avoid that the filament gets heated relevantly, so that the bulbs do not start emitting light.

Examples for these test pulses are: Duration=1ms to 3ms, burst of 3 to 5 test pulses, to be sure about the measuring results, repeated on any switching on of the ignition key.

The test pulses can be applied in the known circuits via a special driving transistor, bypassing the main power transistor for the function in check, or even with a direct activation of the main power output transistor, then measuring the current flow. The existance of the current is detected and interpreted as trailer connected.

On LED equipped rearlamps the current normally is about 200mA to 350mA and there does not exist a filament which can be used to detect the presence of a connected lamp.

Today this problem is covered by a special resistor working in parallel to the LED device, just to increase the current consumption to a value similar to bulb equipped rearlamps. The current in the resistance is just a parasitic one and is ever present, having no functional sense.

### SUMMARY OF THE INVENTION

Therefore it is the main object of the present invention to provide a circuit for controlling the presence of a trailer connected to a towing truck, via the control of the electric current flow in the rear LED lamps of the trailer, which solves the above mentioned problems.

The basic idea of the present invention is to provide a circuit which simulates the presence of a bulb on a LED lamp, realizing a short-time high current sink during the test pulse, but not having this current anymore when the lamp is in function, as the high test-current exists only for some milliseconds, long enough for the detection.

The circuit has a "condensator-like" behaviour, as a driven input stage of the LED device, giving for a short time the behaviour as a lamp equipped with filament bulbs, by increasing the current consumption for a dedicated time,. After that time, this additional current disappears, therefore minimizing the power consumption.

A subject of the present invention is a circuit for controlling the presence of a trailer connected to a towing truck, via the control of the electric current flow in the rear LED lamps of the trailer, comprising means for simulating the presence of a filament of a bulb lamp in a LED lamp, by increasing the current consumption of the LED lamp with an additional current component in the form of one or more current pulses, only for a given dedicated time such that the LED lamp does not emit light.

Additional preferred characteristics comprise:
- the means for simulating the presence of a filament of a bulb lamp in a LED lamp detect the presence of a trailer connected to a towing truck if said LED lamp is correctly connected, else consider the trailer not present;
- the means for simulating the presence of a filament of a bulb lamp simulates an additional dissipating resistance value (R) to the equivalent resistance of the LED lamp, so as to simulate the equivalent resistance of a bulb lamp.
Dependent claims define other preferred characteristics.

### BRIEF DESCRIPTION OF THE DRAWINGS

The invention will become fully clear from the following detailed description, given by way of a mere exemplifying and non limiting example, to be read with reference to the attached drawing figures, wherein:
- Fig. 1 shows a block diagram of the circuit in accordance with the invention;
- Figure 2 shows a time diagram of the current flow in the circuit;
- Figure 3 shows a non limiting example of embodiment of the circuit.

The same reference numerals and letters in the figures designate the same or functionally equivalent parts.

### DESCRIPTION OF THE PREFERRED EMBODIMENT

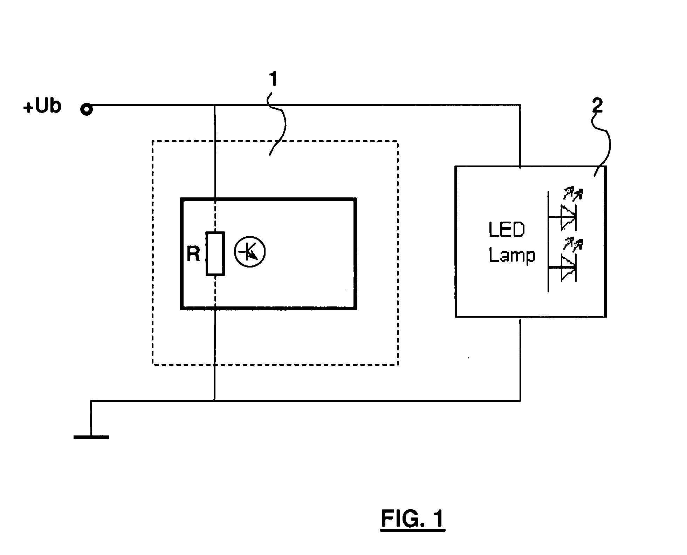

Figure 1 shows a block 1 as a "condensator-like" driven input stage for the LED lamp unit 2, giving for a short time the behaviour as a lamp equipped with filament bulbs, by increasing the current consumption with an additional current component for a given dedicated time. After that time, this additional current is not present anymore.

On getting one or more pulses at the input terminal "+Ub" for a short time, the circuit will give way to a total current flow which in a typical but not limiting example can be of about 1,1 A, via a simulated resistance R in the block 1, so simulating the presence of a bulb lamp instead of a LED lamp. The resistance R can be considered as an additional dissipating resistance in parallel to the internal resistance of the LED lamp.

The short time may be for example from 10 ms to 70 ms, such that the LED lamp in not excited and does not emit light.

After that short time, the contribution of the simulated resistance R disappears and only the normal feeding current to the LED lamp will remain, via terminal "+Ub".

The LED lamp unit 2 can be any rear lamp installed on a trailer, like blinking light, or braking light, or other rear lights.

The trailer may be any kind of trailer, which can be connected-to and disconnected-from a towing truck.

This way, a bulb-similar current on LED-rearlamps is realized for a short time, to be able to recognize the presence of the LED-lamp with the same means as used in a known way for the bulb equipped lamps, and not shown in the figures for simplicity, as the skilled in the art is able to implement it in any known way.

The short time to give the bulb-similar current sink may be in a non limiting example from 10ms to 70ms. This value can vary depending on the application.

The block 1 may be implemented in a number of ways, including microcontroller units, and can be installed inside the LED lamp unit 2 or even outside, preferably in proximity thereof.

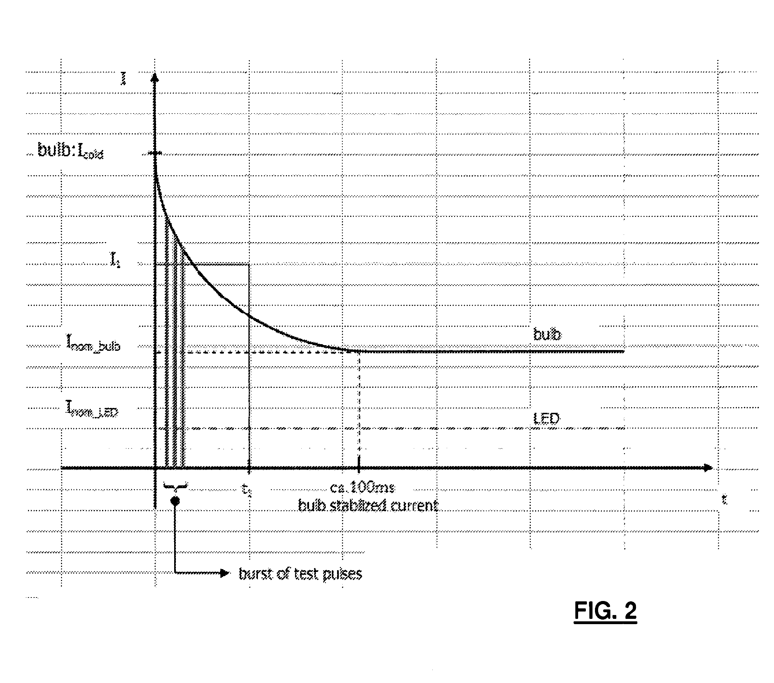

In Figure 2, the time diagram shows the trend of the current I_{cold} in a bulb-type lamp and in a LED-type lamp. The nominal current in a bulb is higher and in a stabilized situation can be for example 0.9 A, after a time of about 100 ms from the starting instant. In the first time period the current has a descending continuous trend from a maximum value. The nominal current in a LED lamp is lower, for example from 200 mA to 350 mA.

According to the invention, one or more very short pulses are generated in a time interval t₁ of 10 ms to 70 ms (in fig. 2 "burst of test pulses").

The starting time t=0 for the time interval t1 can be the turning on of the ignition key letting the engine start, but of course any other starting time can be used. This check can also be repeted with a given time frequency.

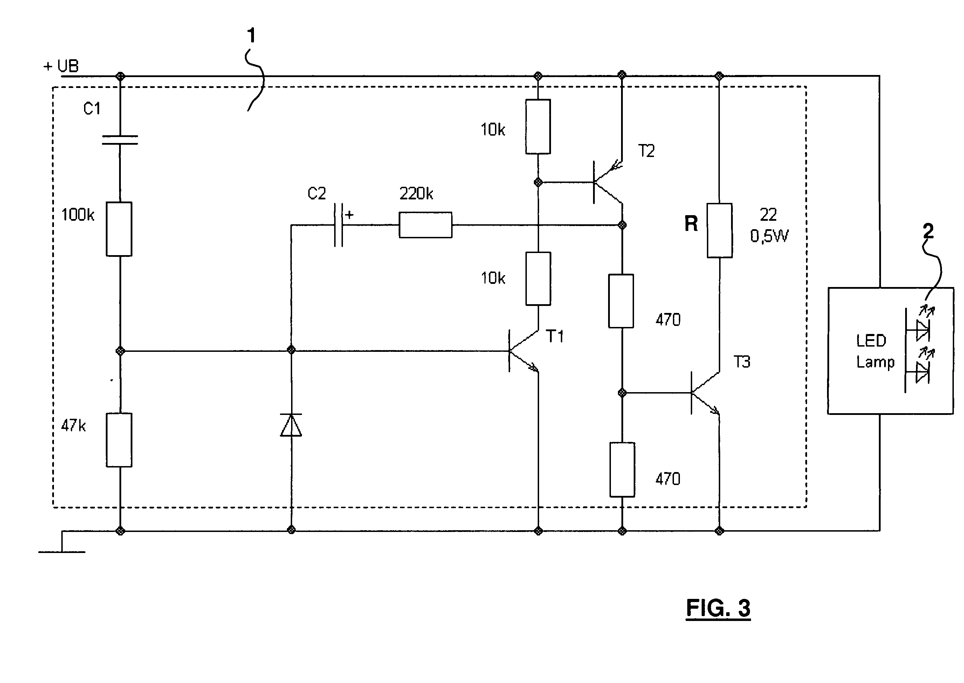

A circuit example in shown in Fig. 3, where the elements internal to the dotted line implement block 1 fo fig. 1.

A resistance R is fed via a transistor activating circuit only for a time t1. This time is obtained via a feedback line including capacitor C2, which allow transistor T3 switch into conduction. Resistor R acts this way as a parallel branch to the LED lamp unit 2, obtaining the total current. Resistor R may be of a relative low resistance value (i.e. 22 Ω) and high power dissipation (i.e. 0,5 W). Transistor T3 is driven by other transistors T1, T2 suitably polarized.

After t1, transistor T3 is switched off, and the only current component is that flowing through the LED lamp unit 2.

For example capacitor values of C1 = 100 nF, C2 = 0,47µF may be used.

If the LED lamp is correctly connected, by means of these pulses the presence of the trailor can be detected. If the LED lamp is not connected, also the additional circuit of block 1 is not connected, and the pulses can not be applied through terminal "+Ub" and therefore the trailer is considered as not present.

Further implementation details will not be described, as the man skilled in the art is able to carry out the invention starting from the teaching of the above description.

## Claims

1. Circuit for controlling the presence of a trailer connected to a towing truck, via the control of the electric current flow in rear LED lamps of the trailer, comprising means for simulating the presence of a filament of a bulb lamp in at least a LED lamp, by increasing the current consumption of the LED lamp with an additional current component in the form of one or more current pulses, only for a given dedicated time in the range from 10 ms to 70 ms so that the LED lamp does not emit light,
**characterized in that** it comprises:
- a resistance (R),
- a transistor (T3) activating circuit for feeding said resistance (R) only for said dedicated time, and
- a feedback line including a capacitor (C) for allowing transistor switch into conduction,
and **in that** said dedicated time is obtained via said feedback line .

2. Circuit as in claim 1, wherein said means for simulating the presence of a filament of a bulb lamp in at least a LED lamp detect the presence of a trailer connected to a towing truck if said LED lamp is correctly connected, else consider the trailer not present.

3. Circuit as in claim 1, wherein said means for simulating the presence of a filament of a bulb lamp in at least a LED lamp simulates an additional dissipating resistance value (R) to the equivalent resistance of the LED lamp, so as to simulate the equivalent resistance of a bulb lamp.

4. Circuit as in claim 1, wherein said at least a LED lamp is one or more of any rear LED lamps on a trailer, such as blinking light, or braking light.

## Patentansprüche

1. Schaltung zum Steuern des Vorhandenseins eines Anhängers, der mit einer Zugmaschine verbunden ist, über die Steuerung des Flusses von elektrischem Strom in rückwärtigen LED-Lampen des Anhängers, umfassend ein Mittel zum Simulieren des Vorhandenseins eines Filaments einer Kolbenlampe in zumindest einer LED-Lampe durch Erhöhen des Stromverbrauchs der LED-Lampe mit einer zusätzlichen Stromkomponente in der Form eines oder mehrerer Stromimpulse nur für eine gegebene dedizierte Zeit im Bereich von 10 ms bis 70 ms, sodass die LED-Lampe kein Licht emittiert,
**dadurch gekennzeichnet, dass** sie umfasst:
- einen Widerstand (R),
- einen Transistor (T3), der eine Schaltung zum Speisen des Widerstandes (R) nur für die dedizierte Zeit aktiviert, und
- eine Rückkopplungsleitung, die einen Kondensator (C) aufweist, um zu ermöglichen, dass der Transistor in Leitung schaltet,
und dass die dedizierte Zeit über die Rückkopplungsleitung erhalten wird.

2. Schaltung nach Anspruch 1,
wobei das Mittel zum Simulieren des Vorhandenseins eines Filaments einer Kolbenlampe in zumindest einer LED-Lampe das Vorhandensein eines mit einer Zugmaschine verbundenen Anhängers detektiert, wenn die LED-Lampe korrekt verbunden ist, ansonsten wird der Anhänger als nicht vorhanden betrachtet.

3. Schaltung nach Anspruch 1,
wobei das Mittel zum Simulieren des Vorhandenseins eines Filaments einer Kolbenlampe in zumindest einer LED-Lampe einen zusätzlichen Wert (R) eines dissipierenden Widerstandes zu dem äquivalenten Widerstand der LED-Lampe simuliert, um den äquivalenten Widerstand einer Kolbenlampe zu simulieren.

4. Schaltung nach Anspruch 1,
wobei die zumindest eine LED-Lampe eine oder mehrere von rückwärtigen LED-Lampen an einem Anhänger ist, wie ein Blinklicht oder ein Bremslicht.

## Revendications

1. Circuit pour contrôler la présence d'une remorque accouplée à un camion remorqueur, par l'intermédiaire du contrôle du flux de courant électrique dans des lampes à LED arrière de la remorque, comprenant des moyens pour simuler la présence d'un filament d'une lampe à ampoule dans au moins une lampe à LED, en augmentant la consommation de courant de la lampe à LED avec une composante de courant supplémentaire sous forme d'une ou de plusieurs impulsions de courant, seulement pendant une période dédiée donnée dans la plage de 10 ms à 70 ms pour que la lampe à LED n'émette pas de lumière,
**caractérisé en ce qu'**il comprend :
- une résistance (R),
- un circuit d'activation de transistor (T3) pour alimenter ladite résistance (R) seulement pendant ladite période dédiée, et
- une ligne de rétroaction comprenant un condensateur (C) pour permettre une commutation de transistor en conduction,
et **en ce que** ladite période dédiée est obtenue par l'intermédiaire de ladite ligne de rétroaction.

2. Circuit selon la revendication 1, dans lequel lesdits moyens pour simuler la présence d'un filament d'une lampe à ampoule dans au moins une lampe à LED détectent la présence d'une remorque accouplée à un camion remorqueur si ladite lampe à LED est correctement connectée, autrement considèrent la remorque comme n'étant pas présente.

3. Circuit selon la revendication 1, dans lequel lesdits moyens pour simuler la présence d'un filament d'une lampe à ampoule dans au moins une lampe à LED simulent une valeur de résistance de dissipation supplémentaire (R) par rapport à la résistance équivalente de la lampe à LED, afin de simuler la résistance équivalente d'une lampe à ampoule.

4. Circuit selon la revendication 1, dans lequel ladite au moins une lampe à LED est une ou plusieurs parmi de quelconques lampes à LED arrière sur une remorque, telles qu'un feu clignotant, ou un feu de freinage.
